Europäisches Patentamt

European Patent Office

Office européen des brevets

(19)

(11) Veröffentlichungsnummer: **0 034 732**
**A1**

(12) **EUROPÄISCHE PATENTANMELDUNG**

(21) Anmeldenummer: **81100751.7**

(22) Anmeldetag: **03.02.81**

(51) Int. Cl.³: **F 24 C 15/20**
**B 01 D 46/10**

(30) Priorität: **23.02.80 DE 3006857**

(43) Veröffentlichungstag der Anmeldung:
**02.09.81 Patentblatt 81/35**

(84) Benannte Vertragsstaaten:
**FR GB IT NL**

(71) Anmelder: **NEFF-WERKE Carl Neff GmbH**
**Bahnhof-Strasse 9-11**
**D-7518 Bretten(DE)**

(72) Erfinder: **Schembera, Friedrich**
**Freitheitsstrasse 37**
**D-7519 Walzbachtal 2(DE)**

(72) Erfinder: **Müller, Willi**
**Lorenzrain 23**
**D-7520 Bruchsal 7(DE)**

(74) Vertreter: **Vogl, Leo, Dipl.-Ing.**
**AEG-Telefunken Hausgeräte AG Abteilung Patente**
**Muggenhofer Strasse 135**
**D-8500 Nürnberg(DE)**

(54) **Auswechselbarer Fettfiltereinsatz für Dunstabzugs- und -filterhauben.**

(57) Ein auswechselbarer Fettfiltereinsatz für Dunstabzug-sund - filterhauben besteht aus einer Fettfiltermatte (4) und einem Tragrahmen (1).

Zwecks konstruktiver Vereinfachung des Fettfiltereinsatzes, so daß spezielle Reinigungsarbeiten für die Dunstabzugs-und-filterhaube entfallen und die üblichen Wartungsarbeiten wesentlich erleichtert sind, sind die Fettfiltermatte (4) und der Tragrahmen (1) einstückig als Wegwerfteil ausgebildet, wobei der Tragrahmen (1) aus einem Kunststoffspritzteil hergestellt ist, mit dem die Filtermatte (4) durch Verkleben od. dgl. verbunden ist.

Fig. 1

Croydon Printing Company Ltd.

0034732

NEFF - Werke
Carl Neff GmbH
D-7518 Bretten

Auswechselbarer Fettfiltereinsatz für Dunstabzugs-
und -filterhauben

Die Erfindung bezieht sich auf einen auswechselbaren Fettfiltereinsatz für·Dunstabzugs- und -filterhauben, bestehend
aus einer Fettfiltermatte und einem Tragrahmen.

Fettfiltereinsätze für Dunstabzugshauben bestehen in der Regel aus einer Filtermatte, die in einem Tragkörper eingelegt und dort mit Spann- bzw. Befestigungselemente gesichert bzw. gehalten ist. Die so zusammengestellte Filtereinheit wird dann in das Gehäuse der Dunstabzugshaube eingehängt und dort durch Verklinken bzw. Verrasten gegen Herausfallen gesichert (DE-A-25 28 275). Um die Wirksamkeit solcher Fettfiltermatten aufrecht zu erhalten, ist es erforderlich, daß diese von Zeit zu Zeit herausgenommen und von den abgesetzten Fettablagerungen befreit bzw. gereinigt werden. Solche Wartungsarbeiten werden wegen ihres mühevollen Aufwandes aber oftmals unterlassen. Zur Erleichterung der Wartungsarbeiten werden daher in zunehmenden Maße auch sogen. Einweg-Fettfiltermatten eingesetzt. Durch die Verwendung dieser Einweg- bzw. Wegwerf-Filtermatten erübrigt sich wohl das lästige Auswaschen der Matte, jedoch muß der ebenfalls stark mit Fettablagerungen beschmutz-

- 2 -

0034732

te Tragkörper sowie die zugehörigen Spann- bzw. Befestigungselemente nach wie vor zur Wiederverwendung vorab gereinigt werden. Bekanntlich ist die fetthaltige Verschmutzung an diesen Teilen nur schwer und mit entsprechend stark
wirkenden Reinigungsmitteln zu beseitigen. Solche Reinigungsmittel greifen aber wiederum den Lack und das Material des Tragkörpers und der Halteteile an. Um den bei der
intensiven Reinigung auftretenden Belastungen auch standhalten zu können, müssen darüberhinaus der Tragkörper und
die zugehörigen Spann- bzw. Befestigungselemente wesentlich stabiler ausgebildet sein als es ihre normale Betriebsbelastung an sich erfordern würde.

Hier will die Erfindung Abhilfe schaffen. Die Erfindung,
wie sie in den Ansprüchen gekennzeichnet ist, löst die
Aufgabe, den Filtereinsatz konstruktiv zu vereinfachen, so
daß spezielle Reinigungsarbeiten für die Dunstabzugs- und
-filterhaube entfallen und die üblichen Wartungsarbeiten
wesentlich erleichtert sind.

Die durch die Erfindung erreichten Vorteile sind im wesentlichen darin zu sehen, daß lästige und aufwendige Reinigungsarbeiten vollständig entfallen und die Dunstabzugs-
bzw. -filterhaube mit wenigen Handgriffen in kürzester Zeit
gewartet und wieder für einen zuverlässigen Betrieb hergerichtet werden kann.

Ein Ausführungsbeispiel der Erfindung ist in der Zeichnung
dargestellt und wird an Hand dieser nachfolgend näher beschrieben. Es zeigt

Figur 1 einen als Wegwerfeinheit ausgebildeten Filterrahmen mit integrierter Fettfiltermatte in einer Draufsicht
und flacher, gestreckter Situation;

Figur 1a diese Einheit im Schnitt nach Linie Ia-Ia in Figur 1;

Figur 2 eine bevorzugte Gestaltungsform des Filterrahmens
mit der integrierten Fettfiltermatte in abgebogener Situation;

Figur 2a eine Schnittzeichnung durch diese Einheit nach
Linie IIa - IIa in Figur 2;

Figur 3 und 4 je eine Ausschnittsvergrößerung aus dem Filterrahmen in den Bereichen III der Figur 1a und IV der Figur 2.

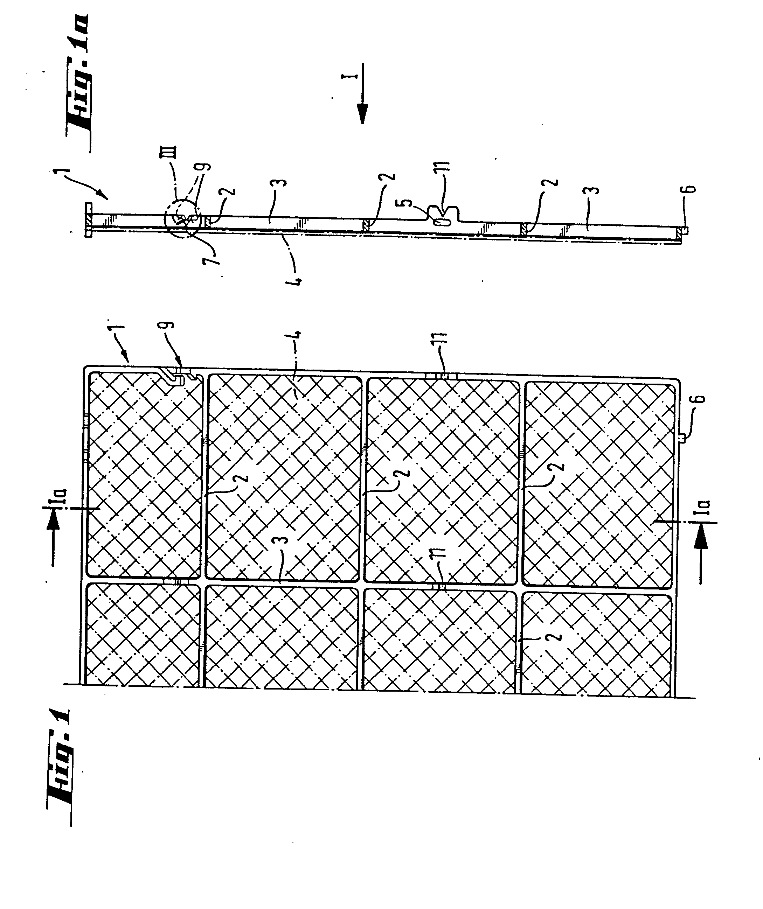

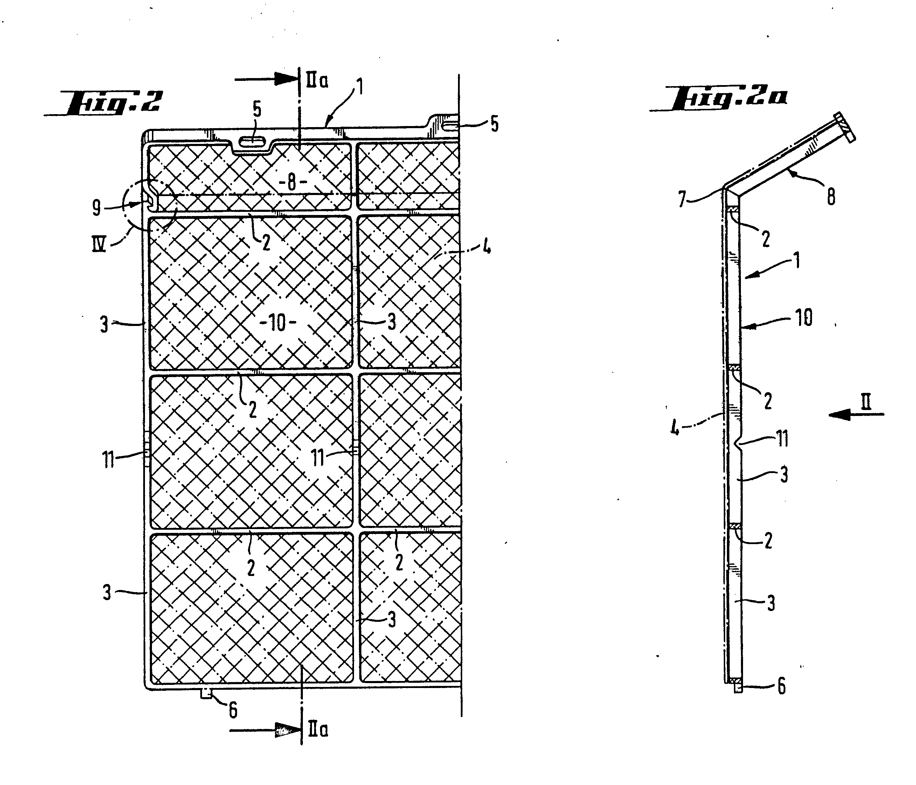

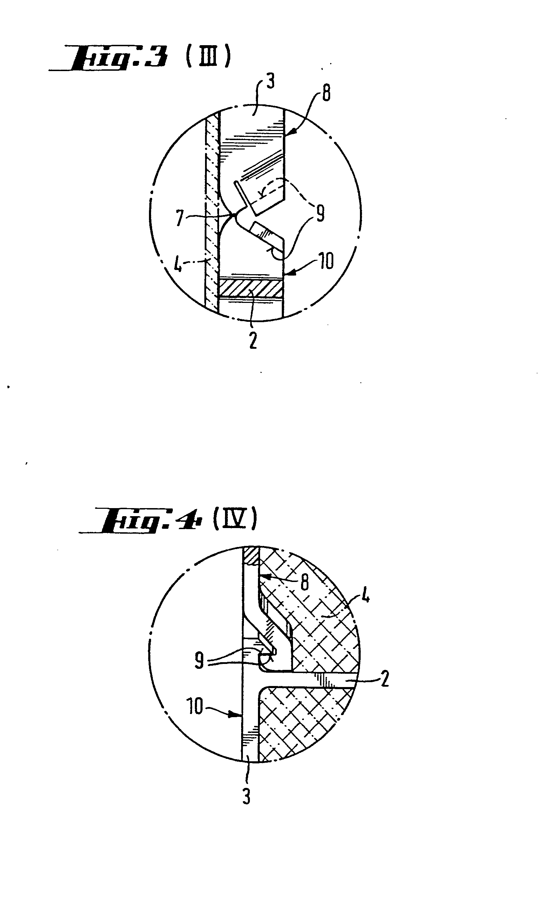

Mit 1 ist ein vorzugsweise im Spritzverfahren hergestellter Tragrahmen aus Kunststoff bezeichnet, der durch mehrere
waagrechte und senkrechte Stege 2 bzw. 3 in eine Vielzahl
von Feldern unterteilt ist. Mit diesem Tragrahmen ist eine
Fettfiltermatte 4 verbunden, so daß eine komplette Filtereinheit entsteht. Die Fettfiltermatte 4 kann dabei am Tragrahmen 1 und evtl. den Stegen 2,3 nachträglich durch Ankleben od. dgl. befestigt werden. Es wäre auch ein Verfahren
denkbar, bei dem mit Herstellung der Fettfiltermatte gleichzeitig der Tragrahmen mit angespritzt wird. Am Tragrahmen 1
sind zum Anbringen bzw. Halten an einer nicht dargestellten Dunstabzugshaube einerseits Einhängelöcher 5 und andererseits Rast- bzw. Befestigungsnocken 6 aus- bzw. angeformt. Um den an sich flächigen Tragrahmen 1 in eine von
der Ebene abweichende, z.B. in eine Art L-Form bringen zu
können, ist dieser an den dafür vorgesehenen Biegestellen
zweckmäßig dünnwandiger bzw. in der Art eines Filmscharniers 7 ausgebildet (Figur 3), so daß ein Teil 8 der Filtereinheit nach oben abgebogen werden kann. Zur Arretierung
des abgebogenen Teiles 8 ist an beiden Seiten im Tragrahmen 1 je eine Verhakungseinrichtung 9 gebildet. Das Teil 8
wird dabei so weit abgebogen, bis eine Verhakungs- oder
Klippsverbindung mit dem übrigen Teil 10 der Filtereinheit
hergestellt ist (Figur 4). Damit die verbrauchte Filtereinheit nach Herausnehmen aus der Dunstabzugshaube in die üblichen Abfallbehälter eingebracht werden kann, sind in den
senkrechten Stegen 3 des Tragrahmens 1 Sollbruchstellen 11 gebildet, an denen der Tragrahmen leicht und mühelos gebrochen und damit räumlich verkleinert werden kann.

**0034732**

Patentansprüche:

1. Auswechselbarer Fettfiltereinsatz für Dunstabzugs- und -filterhauben, bestehend aus einer Fettfiltermatte (4) und einem Tragrahmen (1), dadurch gekennzeichnet, daß die Fettfiltermatte (4) und der Tragrahmen (1) einstückig als Wegwerfteil ausgebildet sind.

2. Fettfiltereinsatz nach Anspruch 1, dadurch gekennzeichnet, daß der Tragrahmen (1) aus einem Kunststoffspritzteil gebildet ist, mit dem die Filtermatte (4) durch Verkleben od. dgl. verbunden ist.

3. Fettfiltereinsatz nach Anspruch 1 oder 2, dadurch gekennzeichnet, daß der Tragrahmen (1) mehrere waagrechte und senkrechte Stege (2,3) aufweist.

4. Fettfiltereinsatz nach Anspruch 1 oder einem der folgenden, dadurch gekennzeichnet, daß am Tragrahmen (1) Einhängelöcher (5) und Rast- bzw. Befestigungsnocken (6) angeformt sind.

5. Fettfiltereinsatz nach Anspruch 1 oder einem der folgenden, dadurch gekennzeichnet, daß der Tragrahmen (1) durch Ausbildung eines Filmscharniers (7) in eine von der flächigen Gestalt abweichende Form bringbar ist.

6. Fettfiltereinsatz nach Anspruch 1 oder einem der folgenden, dadurch gekennzeichnet, daß seitlich im Tragrahmen (1) je eine Einrichtung (9) zum Verhaken des abbiegbaren Teiles (8) mit dem anderen Teil (10) der Filtereinheit gebildet ist.

7. Fettfiltereinsatz nach Anspruch 1 oder einem der folgenden, dadurch gekennzeichnet, daß in den Stegen (3) des Tragrahmens (1) mehrere Sollbruchstellen (11) gebildet sind.

1/3

0034732

**Fig. 1**

Ia

1

9

2

3

4

2

11    11

2

2

Ia    6

**Fig. 1a**

1

III

9

7    2

3

4

I

2

5

11

2

3

6

# Fig.2

## Fig.2a

2/3

0034732

**Fig. 3 (III)**

**Fig. 4 (IV)**

Europäisches
Patentamt

**EUROPÄISCHER RECHERCHENBERICHT**

| | EINSCHLÄGIGE DOKUMENTE | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| | GB - A - 1 455 382 (EXPANDED METAL CO.) <br> * Seite 2, Anspruch 1; Figuren 1-3 * <br><br> -- | 1 | F 24 C 15/20 <br> B 01 D 46/10 |
| | GB - A - 849 304 (DUCT-LESS HOOD CO.) <br> * Seite 3, Zeilen 1-23; Figuren 3,4 * <br><br> -- | 1,4 | |
| | US - A - 3 002 584 (JERABEK) <br> * Spalte 4, Zeilen 17-25, 46-54; Figuren 5,8 * <br><br> -- | 1 | RECHERCHIERTE SACHGEBIETE (Int. Cl.) <br><br> F 24 C <br> B 01 D |
| | GB - A - 1 314 181 (D.A.G. MARS-HALL) <br> * Seite 3, Anspruch 1; Figur 2 * <br><br> -- | 1-3 | |
| D | DE - A - 2 528 275 (GAGGENAU) <br> * Seiten 6,7; Ansprüche 1,3-6; Figur 1 * <br><br> -- | 1-3 | |
| A | US - A - 3 251 290 (JENSON) | | |
| A | US - A - 3 514 578 (DILLS) | | |
| A | GB - A - 1 265 319 (D.A.G. MARS-HALL) <br><br> ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-05-1981 | VANHEUSDEN |

EPA form 1503.1 06.78